# EUROPÄISCHE PATENTSCHRIFT

(11) **EP 2 176 106 B1**
(45) Veröffentlichungstag und Bekanntmachung des Hinweises auf die Patenterteilung: **14.09.2011**
(21) Anmeldenummer: 08774520.4
(22) Anmeldetag: 30.06.2008
(51) Int. Cl.: B60T 17/22

(54) **BREMSSYSTEM FÜR EIN FAHRZEUG UND VERFAHREN ZUM BETREIBEN EINES BREMSSYSTEMS FÜR EIN FAHRZEUG**
BRAKE SYSTEM FOR A VEHICLE AND METHOD FOR OPERATING A BRAKE SYSTEM FOR A VEHICLE
SYSTÈME DE FREINAGE POUR VÉHICULE ET PROCÉDÉ D'EXPLOITATION D'UN SYSTÈME DE FREINAGE POUR VÉHICULE

(30) Priorität: 02.08.2007 DE 102007036261
(43) Veröffentlichungstag der Anmeldung: 21.04.2010
(73) Patentinhaber: Robert Bosch GmbH, 70442 Stuttgart (DE)
(72) Erfinder: STRENGERT, Stefan, 70329 Stuttgart (DE); HARTER, Werner, 75428 Illingen (DE)
(86) Internationale Anmeldenummer: PCT/EP2008/058366
(87) Internationale Veröffentlichungsnummer: WO 2009/015962

(56) Entgegenhaltungen:
- EP-A- 0 467 112
- EP-A- 0 754 611
- EP-B- 1 053 153
- DE-A1- 19 826 131
- DE-A1-102004 009 469

## Beschreibung

Die Erfindung betrifft ein Bremssystem für ein Fahrzeug. Des Weiteren betrifft sie ein Verfahren zum Betreiben eines Bremssystems für ein Fahrzeug.

Die WO 95 13 946 beschreibt ein elektrisches Bremssystem mit einem Zentralmodul zum Ansteuern verschiedener Bremskreise. Über ein Kommunikationssystem ist das Zentralmodul mit den Bremskreisen verbunden.

In der DE 196 34 567 A1 ist ein dezentrales elektromechanisches Bremssystem beschrieben. Es umfasst eine Pedaleinheit, eine Verarbeitungseinheit und Radpaareinheiten zur Regelung der Radbremsen. Das Bremssystem wird mit Hilfe von mindestens zwei

### Bordnetzen mit Energie versorgt.

Des Weiteren beschreibt die DE 103 57 373 B4 ein elektronisches Bremssystem, welches ein Bremspedal mit zwei Bremsanforderungsmitteln aufweist. Eines der beiden Bremsanforderungsmittel ist mit einem Zentralsteuergerät mit integrierter Bremskreissteuerung verbunden. Das andere Bremsanforderungsmittel ist an eine autarke Bremskreisansteuerung gekoppelt. Bei einem Ausfall des Zentralsteuergeräts oder der autarken Bremskreisansteuerung soll die verbliebene Bremskreisansteuerung mit ihrem zugeordneten Bremsanforderungsmittel zumindest einen Bremskreis ansteuern.

In DE 19826 131 A1 wird ein elektrisches Bremssystem für ein Kraftfahrzeug vorgeschlagen, welches aus einer ersten Einheit, die Betätigungssignale von wenigstens einem vom Fahrer betätigbaren Bremsbedienelement empfängt und die auf der Basis der Betätigungssignale Vorgabegrößen für die Steuerung der Radbremsen ermittelt und welches aus zweiten Einheiten besteht, die den Radbremsen des Kraftfahrzeugs zugeordnet sind und die die Vorgabewerte in Steuersignale für die Radbremsen umsetzen. Die zweiten Einheiten sind jeweils einzeln einer einzelnen Radbremse zugeordnet und umfassen jeweils ein Mikrorechnersystem, welches sich selbst überwacht.

DE 10 2004 009 469 A1 offenbart ein Bremssteuerungssystem für ein Fahrzeug und umfasst eine Betriebsbremse zum Abbremsen der Räder. Zur Erhöhung der Betriebssicherheit ist die Betriebsbremse für jedes Rad mit einem elektronisch ansteuerbaren Bremsaggregat zur Bremsbetätigung des jeweiligen Rads ausgestattet, wobei zwei redundant geschaltete zentrale Steuereinrichtungen vorgesehen sind, die über Steuerleitungen mit den Bremsaggregaten so verbunden ist, dass sie die Bremsaggregate unabhängig voneinander ansteuern können.

In der Offenlegungsschrift EP 0 467 112 A2 wird ein elektronisches Bremssystem für Straßenfahrzeuge vorgeschlagen, dessen Elektronik dezentral ausgebildet ist, mit mindestens einem Zentralmodul, das wenigstens einen Mikroprozessor mit eigener Intelligenz aufweist, und mit mehreren Radmodulen, welche ebenfalls Mikroprozessoren mit eigener Intelligenz aufweisen, wobei die Radmodule dem Zentralmodul hierarchisch unterstellt sind.

Herkömmliche Bremssysteme sind jedoch nur ungenügend gegen Funktionsausfälle von mehreren ihrer Komponenten geschützt. Fallen während einer Fahrt mehrere Komponenten eines Bremssystems nacheinander aus, so kann dies zu einem sicherheitsrelevanten Verlust der Bremswirkung führen.

Es ist deshalb wünschenswert, über ein Bremssystem zu verfügen, welches auch bei einem Auftreten von Funktionsstörungen an mehreren Komponenten des Bremssystems noch ein sicheres Bremsen des Fahrzeugs mit dem betroffenen Bremssystem gewährleistet.

Die Erfindung schafft ein Bremssystem für ein Fahrzeug mit den Merkmalen des Anspruchs 1 und ein Verfahren zum Betreiben eines Bremssystems für ein Fahrzeug nach Anspruch 10.

Die vorliegende Erfindung beruht auf der Erkenntnis, dass mindestens eine Radaktoreinrichtung eines Bremssystems zum Ausüben eines Bremsmoments auf ein zugehöriges Rad so ausgebildet werden kann, dass sie eine nicht mehr vorliegende Funktionsfähigkeit von anderen Komponenten des Bremssystems erkennt, und, gegebenenfalls, automatisch ein vorgegebenes Bremsmoment auf das zugehörige Rad ausübt. Eine derartige Radaktoreinrichtung kann immer in den Situationen ein automatisches Abbremsen des Fahrzeugs einleiten, in welchen eine vom Fahrer gesteuerte Bremsung des Fahrzeugs aufgrund eines Ausfallens von mehreren Komponenten des Bremssystems nicht mehr möglich ist. Das erfindungsgemäße Bremssystem und das entsprechende Verfahren gewährleisten damit bei einem Auftreten von schweren Funktionsstörungen an mehreren Komponenten des Bremssystems ein sicheres Reduzieren der Geschwindigkeit des Fahrzeugs zur Vermeidung von Unfällen.

Erfindungsgemäß leiten die Radaktoreinrichtungen eine automatische Abbremsung in Situationen ein, in denen gefährliche Folgen von Ausfällen an Steuergeräten auftreten, welche bei einem herkömmlichen Zweikreisbremssystem mit zwei zentralen Bremssteuereinrichtung zum vollständigen Verlust der Bremswirkung führen würden. Dabei können Ausfälle von zentralen Bremssteuereinrichtungen oder Radaktoreinrichtungen, die im zeitlichen Abstand von wenigen Rechenzyklen auftreten, als getrennte Ausfälle erkannt werden. Bezogen auf die heute üblichen Rechenzyklen von 5 ms bis 10 ms liegt der Minimalabstand für unterscheidbare zeitlich aufeinander folgende Fehler bei etwa 20 ms bis 40 ms. Die Wahrscheinlichkeit, dass zwei Bremssteuereinrichtung und/oder Radaktoreinrichtungen innerhalb dieses kurzen Zeitintervalls ausfallen, ist sehr gering.

Mit Hilfe der vorliegenden Erfindung ist es auch möglich, bei einem Ausfall von mindestens zwei Komponenten eines Bremssystems eine Diagonale von bremsbereiten Rädern abzubremsen. Ebenso können in einer entsprechenden Situation auch drei Radaktoreinrichtungen die ihnen zugeordneten bremsbereiten Räder zum Stillstand bringen. Die automatische Abbremsung kann verschieden gestaltet werden. Beispielsweise werden die bremsbereiten Räder beim automatischen Abbremsen bis zum Stillstand des Fahrzeugs mit dem halben maximalen Bremsmoment belegt. Anschließend kann die Parkbremse aktiviert werden. Als Alternative dazu ist es auch möglich, das Bremsmoment nur so lange auszuüben, bis die Geschwindigkeit des Fahrzeugs auf eine gewünschte Höchstgeschwindigkeit, beispielsweise im Bereich der Schrittgeschwindigkeit liegt, reduziert ist.

Das erfindungsgemäße Bremssystem weist eine einfache Systemarchitektur mit zwei Bremskreisen auf. Dabei basiert die Erfindung zusätzlich auf der Erkenntnis, dass bei herkömmlichen Bremssystemen mit nur einer Bremssteuereinrichtung die Bremssteuereinrichtung einen Engpass für die Verfügbarkeit und Sicherheit der Fremdkraft-Bremsanlage (Brake By Wire System) darstellt.

Die vorliegende Erfindung ist nicht auf ein Fahrzeug mit vier Rädern beschränkt. Das erfindungsgemäße Bremssystem kann auch sechs oder acht Radaktoreinrichtungen aufweisen. In diesem Fall sind beispielsweise jedem der zwei Bremskreise drei oder vier der Radaktoreinrichtungen zugewiesen, die dazu ausgelegt sind, bei Erkennen eines Funktionsausfalls von mehreren Komponenten des Bremssystems automatisch das zugeordnete Rad abzubremsen. Ebenso kann das erfindungsgemäße Bremssystem mehr als zwei Bremskreise haben.

In einer bevorzugten Ausführungsform des Bremssystems ist jede der zwei Bremssteuereinrichtungen dazu ausgelegt, ihre Funktionsfähigkeit selbst zu überprüfen und sich bei Erkennen einer Beeinträchtigung ihrer Funktionsfähigkeit in den inaktiven Zustand zu schalten und/oder ein Warnsignal an die andere Bremssteuereinrichtung und/oder mindestens eine der Radaktoreinrichtungen auszugeben. Ebenso kann jede der vier Radaktoreinrichtungen entsprechend ausgelegt sein. Die Bremssteuereinrichtungen und/oder die Radaktoreinrichtungen sind beispielsweise Fail-Silent ausgeführt. Sie überprüfen ihre aktuelle Funktionsfähigkeit und gehen nach einem Erkennen einer Beeinträchtigung ihrer Funktionsfähigkeit in einen Zustand über, in welchem sie die anderen Komponenten des Bremssystems nicht mehr beeinflussen. Dies verbessert die Sicherheit eines derartigen Bremssystems.

In einer Ausführungsform der Erfindung ist jede der vier Radaktoreinrichtungen dazu ausgelegt, anhand des empfangenen Warnsignals zu erkennen, dass sich mindestens eine der Bremssteuereinrichtungen und/oder Radaktoreinrichtungen im inaktiven Zustand befindet. Als Alternative oder als Ergänzung dazu kann jede der vier Radaktoreinrichtungen auch dazu ausgelegt sein, zu erkennen, ob von einer der Bremssteuereinrichtung und/oder Radaktoreinrichtung innerhalb einer vorgegebenen Zeitdauer ein Signal empfangen wird, und, sofern dies nicht der Fall ist, zu erkennen, dass sich die jeweilige Bremssteuereinrichtung und/oder Radaktoreinrichtung im inaktiven Zustand befindet. Mit diesen Techniken kann eine Radaktoreinrichtung sicher erkennen, welche Komponenten des Bremssystems noch funktionsfähig sind.

Beispielsweise ist jede der mit der ersten Signalleitung verbundenen Radaktoreinrichtungen dazu ausgelegt, bei einem Erkennen, dass sich zuerst die zweite Bremssteuereinrichtung und dann die erste Bremssteuereinrichtung in dem inaktiven Zustand befindet, automatisch das vorgegebenes Bremsmoment auf das zugeordnete Rad des Fahrzeugs auszuüben. Bei einem herkömmlichen zweikanaligen Bremssystem mit zwei Bremssteuereinrichtungen ist nach einem Ausfall der beiden Bremssteuereinrichtungen keine Bremswirkung mehr vorhanden. Das mit dem herkömmlichen Bremssystem ausgestattete Fahrzeug lässt sich deshalb in einer derartigen Situation nicht mehr sicher abbremsen. Demgegenüber kann ein Fahrzeug mit einem erfindungsgemäßen Bremssystem nach einem Ausfall der beiden Bremssteuereinrichtungen noch eine sichere Bremsung ausführen.

Des Weiteren kann jede der mit der ersten Signalleitung verbundenen Radaktoreinrichtungen dazu ausgelegt sein, bei einem Erkennen, dass die mit der zweiten Signalleitung verbundenen Radaktoreinrichtungen und die erste Bremssteuereinrichtung im inaktiven Zustand vorliegen, automatisch das vorgegebene Bremsmoment auf das zugeordnete Rad des Fahrzeugs auszuüben. Auch dies stellt eine Verbesserung gegenüber einem herkömmlichen Bremssystem dar.

In einer bevorzugten Ausführungsform des Bremssystems sind die erste und die zweite Bremssteuereinrichtung über eine dritte Signalleitung miteinander verbunden. Die beiden Bremssteuereinrichtungen können somit untereinander Daten austauschen. Ebenso kann jede Bremssteuereinrichtung eine Information über den Zustand der Radaktoreinrichtungen des eigenen Bremskreises über die dritte Signalleitung an die andere Bremssteuereinrichtung ausgeben.

In einer Weiterbildung sind die erste und die zweite Bremssteuereinrichtung über die dritte Signalleitung mit einem fahrzeugeigenen Anzeigegerät verbunden. Die Bremssteuereinrichtungen sind dann vorzugsweise dazu ausgebildet, den eigenen Zustand und die Zustände der Radaktoreinrichtungen ihrer Bremskreise dem Anzeigegerät zu melden. Das Anzeigegerät erkennt damit beispielsweise, dass beide Bremssteuereinrichtungen sequenziell ausgefallen sind und gibt diese Information über eine Bildanzeige oder über eine Ansage an den Fahrer weiter. Der Fahrer erfährt bei einem plötzlichen Abbremsen seines Fahrzeugs die dem Abbremsen zugrundeliegende Ursache und kann sich entsprechend verhalten. Ebenso können die Bremssteuereinrichtungen den Zustand des Bremssystems auch an ein externes Steuergerät melden. Auf diese Weise ergibt sich bei einem Ausfall von mehreren Komponenten des Bremssystems eine eindeutige Sicht auf den Zustand des Bremssystems durch das externe Steuergerät. Das externe Steuergerät kann dann nach dem Auftreten von Fehlern im Bremssystem seine Reaktion abhängig von den aufgetretenen Fehlern an die verfügbaren Sicherheitsreserven anpassen.

In einer bevorzugten Ausführungsform des erfindungsgemäßen Verfahrens wird eine dem ermittelten Zustand entsprechende Nachricht an ein externes Anzeigegerät, an ein externes Tonausgabegerät und/oder an ein externes Steuergerät ausgegeben. Auf diese Weise kann der Fahrer mittels des Anzeigegeräts und/oder des Tonausgabegeräts über den Zustand des Bremssystems seines Fahrzeugs informiert werden. Ebenso kann das externe Steuergerät nach einem Erkennen eines Funktionsausfalls am Bremssystem durch ein Eingreifen die Funktionsbeeinträchtigung des Bremssystems kompensieren.

Weitere Anwendungsmöglichkeiten und Vorteile der Erfindung ergeben sich aus der nachfolgenden Beschreibung von Ausführungsbeispielen, die in den Zeichnungen dargestellt sind. Es zeigen:
- Figur 1: eine Ausführungsform des erfindungsgemäßen Bremssystems;
- Figur 2: eine Hierarchie der Komponenten des Bremssystems aus Figur 1 bei einer vollen Funktionsfähigkeit aller Komponenten;
- Figur 3: einen Aufbau einer ersten Ausführungsform einer Radaktoreinrichtung;
- Figur 4: eine Logikschaltung einer zweiten Ausführungsform einer Radaktoreinrichtung;
- Figur 5: eine Logikschaltung einer dritten Ausführungsform einer Radaktoreinrichtung;
- Figur 6: eine vierte Ausführungsform einer Radaktoreinrichtung;
- Figur 7: eine Logikschaltung einer Ausführungsform einer Bremssteuereinrichtung; und
- Figur 8: eine Logikschaltung für eine Ausführungsform eines externen Systems.

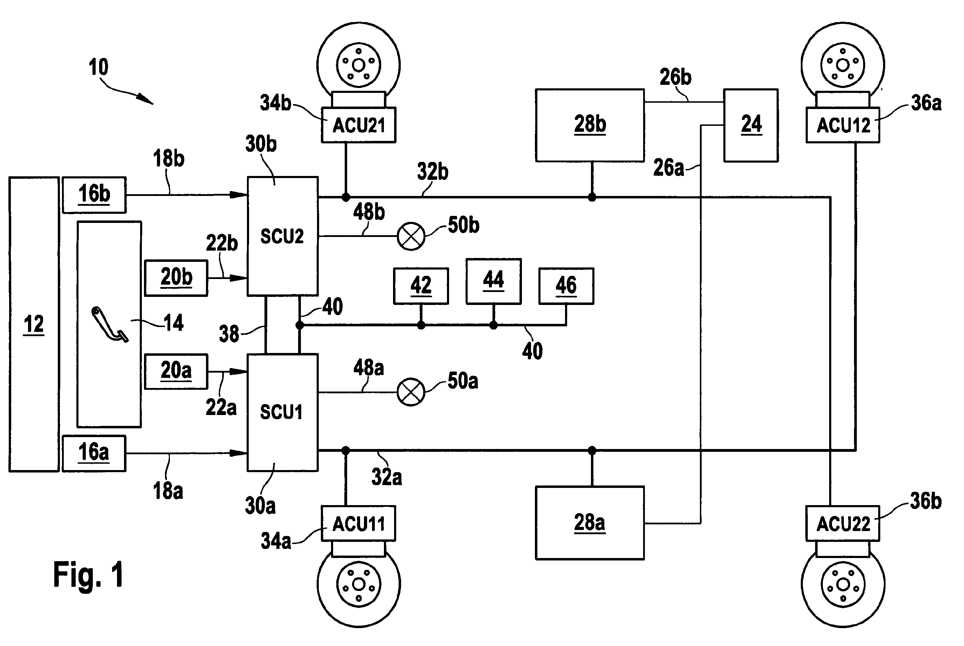

Figur 1 zeigt eine Ausführungsform des erfindungsgemäßen Bremssystems. Das dargestellte Bremssystem 10 ist elektromechanisch mit zwei getrennten Bremskreisen ausgebildet, welche zum Abbremsen der vier Räder eines Fahrzeugs dienen. Wie im Weiteren noch genauer erläutert wird, weist das Bremssystem 10 eine diagonale Bremskreisaufteilung auf.

Das Bremssystem 10 kann durch Betätigen einer Parkbremsbetätigung 12 oder eines Bremspedals 14 angesteuert werden. Dazu sind an der Parkbremsbetätigung 12 zwei Parkbremsschalter 16a und 16b angebracht, welche durch ihre Signale 18a und 18b jeweils einen der Bremskreise des Bremssystems 10 ansteuern. Entsprechend wird eine Betätigung des Bremspedals 14 von zwei Bremspedalschaltern 20a und 20b erfasst, welche dazu ausgelegt sind, der Betätigung entsprechende Signale 22a und 22b auszugeben.

Zur Stromversorgung des Bremssystems 10 dient ein Basisbordnetz 24. Das Basisbordnet 24 ist über zwei Stromversorgungsleitungen 26a und 26b jeweils mit einem ersten Bordnetz 28a und einem zweiten Bordnetz 28b verbunden.

Das Bremssystem 10 ist mit zwei Bremssteuereinrichtungen 30a und 30b ausgestattet. Beide Bremssteuereinrichtungen 30a und 30b sind beispielsweise eine SCU (System Control Unit). Die erste Bremssteuereinrichtung 30a ist einem ersten Bremskreis zugeordnet. Sie ist über einen Datenbus 32a mit den Radaktoreinrichtungen 34a und 36a verbunden, welche jeweils einem Rad des Fahrzeugs zugeordnet sind. Die Räder der Radaktoreinrichtungen 34a und 36a sind diagonal an dem Fahrzeug angeordnet. Die Radaktoreinrichtung 34a steuert die Bremsscheibe des linken Vorderrads und die Radaktoreinrichtung 36a steuert die Bremsscheibe des rechten Hinterrads. Beide Radaktoreinrichtungen 34a und 36a beinhalten den für den sicheren Betrieb erforderlichen Elektronikumfang. Eine Radaktoreinrichtung 34a, 34b, 36a oder 36b ist vorzugsweise eine ACU (Actor Control Unit).

Über den Datenbus 32a sind die Komponenten 30a, 34a und 36a des ersten Bremskreises mit dem ersten Bordnetz 28a verbunden. Die Bremssteuereinrichtung 30a tauscht über den Datenbus 32a Daten mit den Radaktoreinrichtungen 34a und 36a und mit dem ersten Bordnetz 28a aus. Gleichzeitig werden die Bremssteuereinrichtung 30a und die Radaktoreinrichtungen 34a und 36a des ersten Bremskreises von dem ersten Bordnetz 28a über den Datenbus 32a mit Energie versorgt.

Die Bremssteuereinrichtung 30a ist an den Parkbremsschalter 16a und den Bremspedalschalter 20a gekoppelt und empfängt somit die Signale 18a und 22a. Entsprechend der empfangenen Signale 18a und 22a gibt die Bremssteuereinrichtung 30a Steuersignale an die Radaktoreinrichtungen 34a und 36a zum Abbremsen der zugeordneten Räder aus.

Analog empfängt die zweite Bremssteuereinrichtung 30b die Signale 18b und 22b der Schalter 16b und 20b. Die zweite Bremssteuereinrichtung 30b ist über einen Datenbus 32b mit zwei weiteren Radaktoreinrichtungen 34b und 36b und dem zweiten Bordnetz 28b verbunden. Dabei ist die Radaktoreinrichtung 34b dazu ausgelegt, das rechte Vorderrad abzubremsen. Die Radaktoreinrichtung 36b betreibt die Bremsscheibe des linken Hinterrads des Fahrzeugs.

Die beiden Bremssteuereinrichtungen 30a und 30b sind über zwei Datenbusse 38 und 40 miteinander verbunden. Der Datenbus 38 dient nur zur internen Kommunikation zwischen den beiden Bremssteuereinrichtungen 30a und 30b. Über den Datenbus 40 sind die beiden Bremssteuereinrichtungen 30a und 30b auch an ein Cockpit-Anzeigegerät 42, an ein ESP-System 44 (Elektronisches Stabilitätsprogramm) und an ein Motorsteuergerät 46 angeschlossen. Mit Hilfe des Datenbusses 40 können die beiden Bremssteuereinrichtungen 30a und 30b Daten mit den externen Fahrzeugkomponenten 42, 44 und 46 austauschen. Des Weiteren können die Bremssteuereinrichtungen 30a und 30b über den Datenbus 40 auch an einen Fahrzeug-CAN und/oder an ein Werkstatt-Diagnose-System angebunden sein.

Über die bidirektionalen Datenbusse 38 und 40 werden auch Daten zwischen dem ersten Bremskreis und dem zweiten Bremskreis ausgetauscht. Diese Daten sind beispielsweise Signale 18a, 18b, 22a und 22b der Schalter 16a, 16b, 20a und 20b oder Zustände der Bremssteuereinrichtungen 30a und 30b und der Radaktoreinrichtungen 34a, 34b, 36a und 36b. Über den Datenbus 40 werden zudem externe Bremsmomentanforderungen für die beiden Bremskreise übertragen. Die beiden Bremssteuereinrichtungen 30a und 30b übertragen ihrerseits die Istwerte der Radbremsmomente zu den externen Fahrzeugkomponenten 42 bis 46. Bei einem Fehler innerhalb des Bremssystems 10 übertragen die Bremssteuereinrichtungen 30a und 30b Anforderungen an die externen Fahrzeugkomponenten 42 bis 46 zur Begrenzung des Antriebsmoments.

Die erste Bremssteuereinrichtung 30a ist zusätzlich über eine Leitung 48a an eine Warnlampe 50a des ersten Bremskreises im Cockpit gekoppelt. Ebenso steuert die zweite Bremssteuereinrichtung 30b eine Warnlampe 50b des zweiten Bremskreises im Cockpit über eine Leitung 48b.

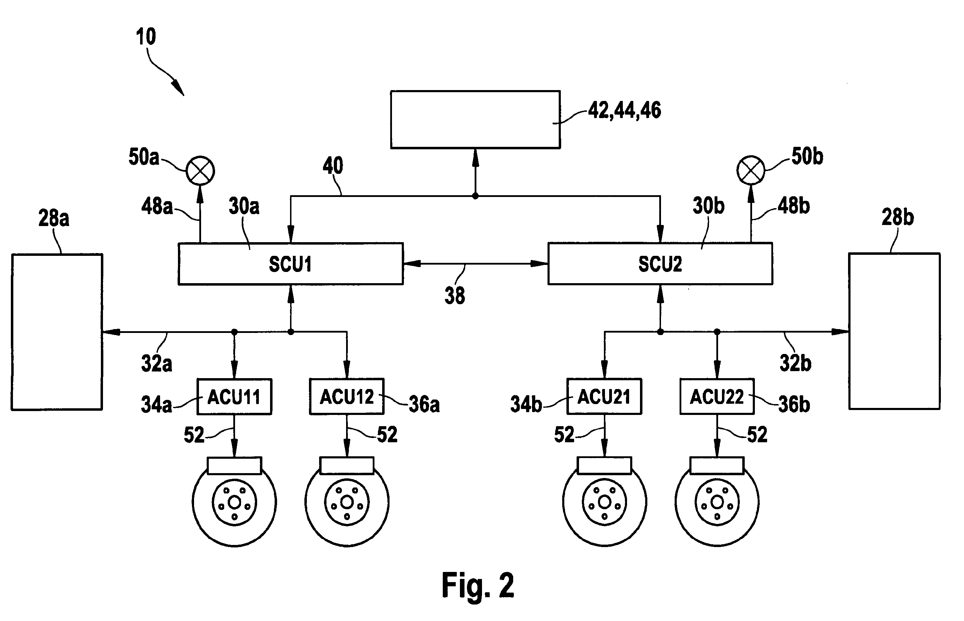

Figur 2 zeigt eine Hierarchie der Komponenten des Bremssystems 10 aus Figur 1 bei einer vollen Funktionsfähigkeit aller Komponenten.

Sind alle Komponenten des Bremssystems 10 voll funktionsfähig, so tauschen die beiden Bremssteuereinrichtungen 30a und 30b mit dem externen System (ESY, Extern System) 42 bis 46 Befehle und Daten aus. Das externe System 42 bis 46 umfasst dabei das Cockpit-Anzeigegerät 42, das ESP-System 44 und das Motorsteuergerät 46. Zusätzlich sind die beiden Bremssteuereinrichtungen 30a und 30b dazu ausgelegt, eine Betätigung des Bremspedals oder eine Parkbremsbetätigung (nicht skizziert) zu erkennen. Die Bremssteuereinrichtungen 30a und 30b steuern dann die Warnlampen 50a und 50b und die Radaktoreinrichtungen 34a, 34b, 36a und 36b entsprechend.

Die beiden Bremsteuereinrichtungen 30a und 30b können über die Datenbusse 38 und 40 auch untereinander Daten austauschen. Des Weiteren kann die Bremssteuereinrichtung 30a des ersten Bremskreises mit dem ihr zugeordneten ersten Bordnetz 28a und den Radaktoreinrichtungen 34a und 36a Daten austauschen. Insbesondere gibt die Bremssteuereinrichtung 30a über den Datenbus 32a Bremsbefehle an die Radaktoreinrichtungen 34a und 36a aus. Ebenso kann die Bremssteuereinrichtung 30b des zweiten Bremskreises über den Datenbus 32b eine Datenübertragung mit den Radaktoreinrichtungen 34b und 36b ausführen und Bremsbefehle an diese ausgeben. Auch mit dem zweiten Bordnetz 28b kann die Bremssteuereinrichtung 30b Informationen austauschen.

Jede der vier Radaktoreinrichtungen 34a, 34b, 36a und 36b ist dazu ausgelegt, nach einem Empfang eines entsprechenden Steuersignals ein Bremsmoment 52 auf das ihr zugeordnete Rad auszuüben. Auf diese Weise kann bei voller Funktionsfähigkeit der Komponenten des Bremssystems 10 eine Betätigung des Bremspedals oder des Parkbremsschalters in ein Abbremsen der Fahrzeugräder umgewandelt werden.

Die in Figur 2 dargestellte Hierarchie der einzelnen Komponenten des Bremssystems 10 ist aufgehoben, sobald eine der Komponenten erkennt, dass ihre Funktionsfähigkeit beeinträchtigt ist.

Die Bremssteuereinrichtungen 30a und 30b sind Fail-Silent ausgelegt, d. h. sie überprüfen ihre eigene Funktionsfähigkeit und schalten sich bei einem Erkennen einer mangelhaften Funktionsfähigkeit in einen inaktiven Zustand, in welchem sie keine Bremsbefehle mehr an die Radaktoreinrichtungen 34a und 36a oder 34b und 36b ihrer Bremskreise mehr senden. Ebenso sind die Radaktoreinrichtungen 34a, 34b, 36a und 36b dazu ausgelegt, sich selbst zu überprüfen und unter bestimmten Vorraussetzungen sich selbst in einen inaktiven Zustand zu schalten. Die Radaktoreinrichtungen 34a, 34b, 36a und 36b geben nach einem automatischen Inaktivschalten keine Steuerbefehle mehr an den jeweiligen Radaktor des zugeordneten Rads aus. Die Radbremse wird dann geöffnet, so dass das Rad frei und ungebremst ist. Kurz vor oder nach einem Inaktivschalten kann eine Bremssteuereinrichtung 30a oder 30b oder eine Radaktoreinrichtung 34a, 34b, 36a oder 36b noch eine entsprechende Fehlermeldung an die anderen Komponenten des Bremssystems 10 ausgeben.

Des Weiteren sind die Radaktoreinrichtungen 34a, 34b, 36a und 36b dazu ausgelegt, ein sequenzielles Auftreten von Funktionsstörungen an den anderen Radaktoreinrichtungen 34a, 34b, 36a oder 36b und/oder an den Bremssteuereinrichtungen 30a und 30b zu erkennen. Ebenso erkennen die Radaktoreinrichtungen 34a, 34b, 36a und 36b Situationen, in welchen mehrere Radaktoreinrichtungen 34a, 34b, 36a oder 36b und/oder Bremssteuereinrichtungen 30a oder 30b inaktiviert sind. Beispielsweise werten die Radaktoreinrichtungen 34a, 34b, 36a und 36b dazu eine empfangene Fehlermeldung aus. Als Alternative oder als Ergänzung dazu können die Radaktoreinrichtungen 34a, 34b, 36a und 36b des Bremssystems 10 auch dazu ausgelegt sein, zu kontrollieren, ob sie innerhalb einer vorgegebenen Zeitdauer eine Rückmeldung oder ein Signal von einer Bremssteuereinrichtung 30a oder 30b oder einer anderen Radaktoreinrichtung 34a, 34b, 36a oder 36b erhalten.

Auf den Radaktoreinrichtungen 34a, 34b, 36a, und 36b sind Bremsstrategien abgespeichert, welche nach einem Erkennen einer Situation, in welcher eine durch den Fahrer gesteuerte Reaktion des Bremssystems 10 nicht mehr möglich ist, ausgeführt werden. Unter der Voraussetzung, dass die Ausfälle der Komponenten des Bremssystems 10 sequenziell auftreten, verbleiben selbst nach einem Ausfallen von mehreren Komponenten des Bremssystems 10 am Fahrzeug immer noch ein bis zwei Räder, welche sich abbremsen lassen. Eine derartige Situation ist beispielsweise ein Inaktivschalten von mehreren anderen Komponenten 30a, 30b, 34a, 34b, 36a oder 36b des Bremssystems 10. Die Radaktoreinrichtungen 34a, 34b, 36a und 36b sind somit in der Lage, nach einem sequenziellen Auftreten von Funktionsstörungen an anderen Radaktoreinrichtungen34a, 34b, 36a oder 36b und/oder an den beiden Bremssteuereinrichtungen 30a oder 30b eine vorgegebene, auf die auftretende Situation abgestimmte Bremsstrategie auszuführen. Die vorgegebenen Bremsstrategien beinhalten ein automatisches Abbremsen der Radaktoreinrichtungen 34a, 34b, 36a und/oder 36b, wenn sie erkennen, dass entweder beide Bremssteuereinrichtungen 30a oder 30b ausgefallen sind oder dass zwei andere Radaktoreinrichtungen 34a, 34b, 36a oder 36b und die zugeordnete Bremssteuereinrichtung 30a oder 30b ausgefallen ist. Die Bremsstrategien der einzelnen Radaktoreinrichtungen 34a, 34b, 36a und 36b sind dabei aufeinander abgestimmt. Insbesondere passen die auf den Radaktoreinrichtungen 34a, 34b, 36a und 36b hinterlegten Befehle zusammen.

Im Folgenden werden Bremsstrategien für verschiedene Situationen beschrieben. Unter einem Ausfallen ist dabei auch ein selbstständig durchgeführtes Inaktivschalten einer Bremssteuereinrichtung 30a und 30b oder einer Radaktoreinrichtung 34a, 34b, 36a und 36b zu verstehen.

Beispielsweise kann während einer Fahrt des Fahrzeugs mit dem Bremssystem 10 die Situation auftreten, dass kurz hintereinander beide Bremssteuereinrichtungen 30a und 30b des Bremssystems 10 ausfallen. Die Radaktoreinrichtungen 34a, 34b, 36a und 36b des Bremssystems 10 sind deshalb dazu ausgelegt, nach einem Erkennen dieser Situation eine Reduzierung der Geschwindigkeit des Fahrzeugs zu bewirken. Dazu leiten die beiden Radaktoreinrichtungen 34a und 36a oder 34b und 36b, deren zugeordnetes Bremssteuereinrichtung 30a oder 30b zuletzt ausgefallen ist, ein automatisches Abbremsen der ihnen zugeordneten Räder ein. Fällt zuerst die erste Bremssteuereinrichtung 30a und anschließend die zweite Bremssteuereinrichtung 30b aus, so üben die beiden Radaktoreinrichtungen 34b und 36b des zweiten Bremskreises ein Bremsmoment 52 auf ihre Räder aus, welches bewirkt, dass das Fahrzeug innerhalb einer vorgegebenen Zeitdauer zum Stillstand kommt oder seine Geschwindigkeit auf eine vorgegebene Höchstgeschwindigkeit reduziert wird.

Zusätzlich sind die Radaktoreinrichtungen 34a und 36a des ersten Bremskreises und die Radaktoreinrichtungen 34b und 36b des zweiten Bremskreises auch dazu in der Lage, einen Ausfall der beiden Radaktoreinrichtungen 34a und 36a oder 34b und 36b des anderen Bremskreises zu erkennen. Die noch aktiven Radaktoreinrichtungen 34a und 36a oder 34b und 36b können dann sofort ein Bremsmoment 52 auf ihre Räder aktivieren. Ebenso ist es möglich, dass die noch funktionsfähigen Radaktoreinrichtungen 34a und 36a oder 34b und 36b in dieser Situation nur dann ein automatisches Abbremsen einleiten, wenn sie erkennen, dass die Bremssteuereinrichtung 30a oder 30b ihres eigenen Bremskreises auch nicht mehr aktiv ist. Eine derartige Situation liegt beispielsweise vor, wenn die Radaktoreinrichtungen 34a und 36a des ersten Bremskreises und die zweite Bremssteuereinrichtung 30b nacheinander ausfallen. Die beiden Radaktoreinrichtungen 34b und 36b des zweiten Bremskreises beginnen nach einem Erkennen einer derartigen Situation sofort mit einem automatischen Abbremsen der ihnen zugeordneten Räder.

Ein sequenzielles Ausfallen von mehreren Komponenten des Bremssteuersystems liegt auch vor, wenn zuerst eine der Radaktoreinrichtungen 34a, 34b, 36a oder 36b und danach die beiden Bremssteuereinrichtungen 30a und 30b ausfallen. Vorzugsweise leiten dann die Radaktoreinrichtungen 34a und 36a oder 34b und 36b, in deren Bremskreis kein Inaktivschalten einer Radaktoreinrichtung 34a, 34b, 36a oder 36b erfolgt ist, ein Abbremsmanöver ein. Sind beispielsweise die Bremssteuereinrichtungen 30a und 30b und die Radaktoreinrichtung 34a ausgefallen, so beginnen die Radaktoreinrichtungen 34b und 36b sofort mit einem Abbremsen des Fahrzeugs. Als Alternative dazu kann die noch aktiv geschaltete Radaktoreinrichtung 36a auch eine verstärkte Bremswirkung auf das ihr zugeordnete Rad ausüben.

Das Bremssystem 10 ist damit auch nach einem sequenziellen Auftreten von Funktionsstörungen in mehreren seiner Komponenten während einer Fahrt noch dazu in der Lage, die Geschwindigkeit des Fahrzeugs mit dem Bremssystem 10 zu reduzieren. Die automatische Reduzierung der Geschwindigkeit kann dabei so lange erfolgen, bis das Fahrzeug zum Stillstand gebracht ist. Dies trägt dazu bei, dass bei einem derartigen Folgeausfall von mehreren Komponenten des Bremssystems 10 ein Unfall vermeidbar ist, oder zumindest die Folgen eines derartigen Unfalls durch eine drastische Reduzierung der Geschwindigkeit des Fahrzeugs mit dem Bremssystem 10 minimierbar sind. Dies erhöht die Sicherheit für die Insassen des Fahrzeugs mit dem Bremssystem 10.

Während des automatischen Abbremsens kann der Zustand des Bremssystems 10 über den Datenbus 40 an die externen Komponenten 42 bis 46 gemeldet werden. Beispielsweise wird eine Zustandsinformation an das Cockpit-Anzeigegerät 42 übertragen. Das Cockpit-Anzeigegerät 42 aktiviert dann eine entsprechende Bildanzeige oder eine Tonausgabe. Auf diese Weise erfährt der Fahrer des Fahrzeugs mit dem Bremssystem 10, warum sein Fahrzeug während der Fahrt plötzlich automatisch die Geschwindigkeit reduziert.

Zusätzlich können externe Systeme aufgrund der auf dem Datenbus 40 übertragenen Informationen die Funktionsbeeinträchtigung des Bremssystems 10 kompensieren oder mildern. Beispielsweise kann ein Fahrdynamik-Regelsystem die Stabilität des Fahrzeugs durch entsprechende Eingriffe aufrechterhalten, ein System zur Motorsteuerung kann das Antriebsmoment bzw. die Fahrzeuggeschwindigkeit reduzieren und bei einem Fahrzeug mit Hybridantrieb kann durch regeneratives Bremsen mit dem eingebauten elektrischen Generator die durch Funktionsstörungen reduzierte Bremswirkung des Bremssystems kompensiert werden.

Des Weiteren werden die von dem Bremssystem 10 ausgegebenen Zustandsinformationen über sequenziell auftretende Ausfälle von Komponenten des Bremssystems 10 extern abgespeichert. Dies vereinfacht die Fehlerdiagnose bei einer späteren Reparatur in einer Werkstatt. Auch auf den Bremssteuereinrichtungen 30a und 30b und auf den Radaktoreinrichtungen 34a, 34b, 36a und 36b können Daten über den Funktionsablauf der einzelnen Komponenten des Bremssystems 10 für die Fehlerdiagnose gespeichert werden.

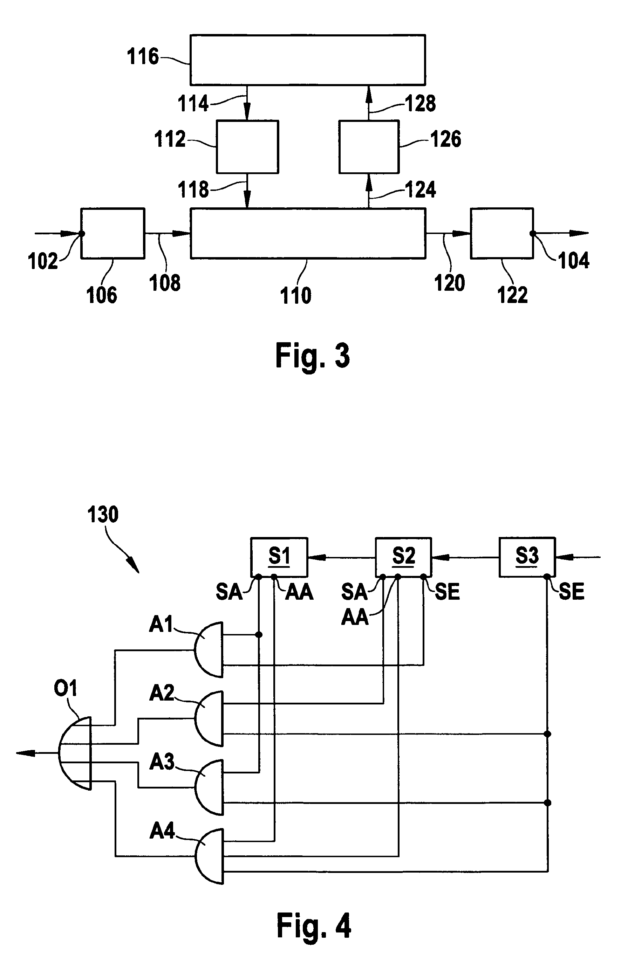

Figur 3 zeigt einen Aufbau einer ersten Ausführungsform einer Radaktoreinrichtung. Die Radaktoreinrichtung weist einen Eingang 102 und einen Ausgang 104 zum Empfangen und Senden von Daten auf. Eine dem Eingang 102 zugeordnete Eingangsschaltung 106 ist dazu ausgelegt, anhand der empfangenen Daten ein Ausfallen einer Komponente des zugehörigen Bremssystems zu erkennen. Wird ein derartiges Ereignis von der Eingangschaltung 106 erkannt, so gibt sie ein entsprechendes Benachrichtigungssignal 108 an eine Auswerteeinheit 110 aus.

Die Radaktoreinrichtung umfasst auch eine Fehlererkennungseinheit 112, welche die Funktionsfähigkeit der Radaktoreinrichtung überprüft. Zusätzlich kontrolliert die Fehlererkennungseinheit 112 die empfangenen Signale 114 einer der Radaktoreinrichtung zugeordnete Radbremse 116. Werden signifikante Fehler von der Fehlererkennungseinheit 112 festgestellt, so stellt die Fehlererkennungseinheit 112 ein entsprechendes Fehlersignal 118 an die Auswerteeinheit 110 bereit.

Dazu empfängt die Fehlererkennungseinheit 112 beispielsweise ein fehlerhaftes Signal 114 von der Radbremse 116. Nach einem Empfang des Fehlersignals 118 oder nach einem Erkennen von Funktionsstörungen an der eigenen Radaktoreinrichtung gibt die Fehlererkennungseinheit 112 ein entsprechendes Fehlersignal 118 an die Auswerteeinheit 110 aus.

Die Auswerteeinheit 110 erkennt mit Hilfe der empfangenen Signale 108 und 118 den Zustand der eigenen Radaktoreinrichtung und der weiteren Komponenten des Bremssystems. Ermittelt die Auswerteeinheit 110 eine Funktionsbeeinträchtigung der eigenen Radaktoreinrichtung, so leitet die Auswerteeinheit 110 ein Abschalten der Radaktoreinrichtung ein. Zuvor gibt die Auswerteeinheit 110 ein Informationssignal 120 an eine Ausgangsschaltung 122 aus. Die dem Ausgang 104 zugeordnete Ausgangsschaltung 122 sendet nach Empfang des Informationssignals 120 eine entsprechende Information über die bevorstehende Inaktivierung der Radaktoreinrichtung an die anderen Komponenten des Bremssystems. Mit Hilfe der Ausgangsschaltung 122 ist auch ein Ansteuern einer Warnlampe möglich.

Des Weiteren ermittelt die Auswerteeinheit 110 anhand des Benachrichtigungssignals 108 den Zustand der anderen Komponenten des Bremssystems und stellt ein entsprechendes Zustandssignal 124 an einen Decoder 126 bereit. Der Decoder 126 leitet aus dem Zustandssignal 124 die in Hinblick auf den aktuellen Zustand des Bremssystems erforderlichen Aktivitäten der Radaktoreinrichtung ab. Liegen beispielsweise mehrere Komponenten des Bremssystems im inaktiven Zustand vor, so ermittelt der Decoder 126, ob ein automatisches Abbremsen des von der Radaktoreinrichtung gesteuerten Rads bei einem derartigen Systemzustand vorgesehen ist. Erfordert die vorliegende Situation ein Abbremsen des der Radaktoreinrichtung zugeordneten Rads, so gibt der Decoder 126 einen entsprechenden Befehl 128 an die Radbremse 116 aus.

Figur 4 zeigt eine Logikschaltung einer zweiten Ausführungsform einer Radaktoreinrichtung. Die Logikschaltung 130 umfasst drei Zwischenspeicher S1, S2 und S3 zum Einlesen von gemeldeten Ausfällen von Komponenten des Bremssystems. Nach jedem weiteren gemeldeten Ausfall einer Komponente des Bremssystems wird der Inhalt der Zwischenspeicher S1 bis S3 mittels eines nicht dargestellten Schieberegisters nach links verschoben. Sind alle drei Zwischenspeicher S1 bis S3 belegt, so enthält der Zwischenspeicher S1 das zuerst gemeldete Ereignis. Der zuletzt gemeldete Ausfall einer Komponente ist als Ereignis im Zwischenspeicher S3 abgelagert.

In den Zwischenspeichern S1 bis S3 sind mit zwei Bit die Ereignisse SE, SA und AA kodiert. Dabei beschreibt das Ereignis SE das Ausfallen der Bremssteuereinrichtung des eigenen Bremskreises, mit welcher die Radaktoreinrichtung direkt verbunden ist. Der Ereignis SA steht für das Ausfallen der Bremssteuereinrichtung des anderen Bremskreises. Ein Ereignis AA liegt vor, wenn eine Radaktoreinrichtung des anderen Bremskreises nach einem Auftreten von Funktionsstörungen inaktiviert wurde.

Als Alternative zu der Ausbildung der Zwischenspeicher S1 bis S3 mit zwei Bit ist es auch möglich, jeden der Zwischenspeicher S1 bis S3 mit drei Bit auszustatten, um alle sechs verschiedenen Steuergeräte des Bremssystems zu kodieren.

Jedem Ereignis SE, SA und AA ist ein Ausgang an mindestens einem der Zwischenspeicher S1, S2 oder S3 zugeordnet. Die Zwischenspeicher S1 bis S3 sind somit dazu ausgelegt, direkt oder mit einer entsprechenden Dekodierung ihren Inhalt anzuzeigen.

Die UND-Gatter A1 bis A4 und das ODER-Gatter O1 dienen zur Dekodierung der empfangenen Fehlermeldungen. Das UND-Gatter A1 ist dazu an den Ausgang SA des Zwischenschalters S 1 und an den Ausgang SE des Zwischenschalters S2 gekoppelt. Entsprechend ist das UND-Gatter A2 mit dem Ausgang SA des Zwischenschalters S2 und an den Ausgang SE des Zwischenschalters S3 verbunden. Ähnlich ist auch das UND-Gatter A3 mit dem Ausgang SA des Zwischenschalters S1 und mit dem Ausgang SE des Zwischenschalters S3 verknüpft. Ein High-Signal liegt somit immer dann an einem der Ausgänge eines UND-Gatters A1, A2 oder A3 an, wenn zuerst die Bremssteuereinrichtung des anderen Bremskreises und dann die Bremssteuereinrichtung des eigenen Bremskreises ausfallen.

Die Ausgänge AA der Zwischenspeicher S1 und S2 sind zusammen mit dem Ausgang SE des Zwischenspeichers S3 mit dem UND-Gatter A4 verbunden. Das UND-Gatter A4 ermittelt damit ein Ausfallen der zwei Radaktoreinrichtungen des anderen Bremskreises und ein anschließend erfolgtes Ausfallen der eigenen Bremssteuereinrichtung.

Die Ausgänge der UND-Gatter A1, A2, A3 und A4 sind an das ODER-Gatter O1 angeschlossen. Liegt am Ausgang des ODER-Gatters O1 ein High-Signal an, so leitet die Radaktoreinrichtung ein Abbremsen des ihr zugeordneten Rads ein.

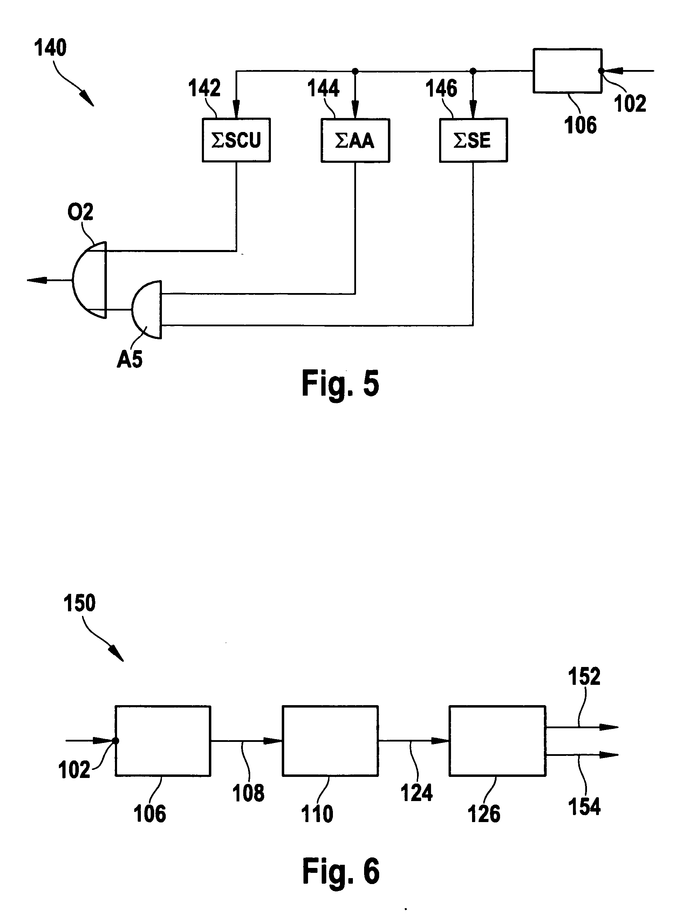

Figur 5 zeigt eine Logikschaltung für eine dritte Ausführungsform einer Radaktoreinrichtung. Die Logikschaltung 140 umfasst einen Eingang 102 mit einer Eingangsschaltung 106 zum Empfangen von einer Abschaltmeldung von anderen Komponenten des Bremssystems. Die Eingangsschaltung 106 ermittelt dann anhand der empfangenen Abschaltmeldung, ob eine Bremssteuereinrichtung oder eine Radaktoreinrichtung ausgefallen ist. Ebenso unterscheidet die Eingangsschaltung 106 zwischen einem Ausfallen einer Bremssteuereinrichtung oder einer Radaktoreinrichtung des eigenen Bremskreises und einem Ausfallen einer Bremssteuereinrichtung oder einer Radaktoreinrichtung des anderen Bremskreises.

Erkennt die Eingangsschaltung 106 ein Ausfallen einer Bremssteuereinrichtung, so gibt die Eingangsschaltung 106 ein Signal an einen Zähler 142 aus. Der Zähler 142 stellt nach zweimaligem Empfang eines derartigen Signals ein High-Signal an ein ODER-Gatter 02 bereit.

Ermittelt die Eingangschaltung 106 ein Ausfallen einer Radaktoreinrichtung des anderen Bremskreises, so gibt sie ein Signal an einen Zähler 144 aus. Auch der Zähler 144 ist dazu ausgelegt, nach einem zweimaligen Signalempfang ein High-Signal an seinem Ausgang bereitzustellen. Das High-Signal des Zählers 144 wird dann an das UND-Gatter A5 weitergeleitet.

Bei Erkennen eines Ausfallens der Bremssteuereinrichtung des eigenen Bremskreises gibt die Eingangsschaltung 106 ein entsprechendes Signal an einen Zähler 146 aus. Dieses Signal wird vom Zähler 146 sofort in ein High-Signal umgewandelt, welches ebenfalls an das UND-Gatter A5 bereitgestellt wird.

Die in Figur 5 gezeigte Logikschaltung 140 einer dritten Ausführungsform einer Radaktoreinrichtung ist allgemeiner, da sie nicht auf bestimmte Reihenfolgen für das Auftreten von Ausfällen an den Komponenten des Bremssystems begrenzt ist. Sie erkennt die zu dekodierenden Situationen auch bei beliebig vielen Folgeausfällen und erlaubt die Realisierung zusätzlicher Bedingungen, wie beispielsweise ein generelles automatisches Abbremsen nach dem Ausfall einer vierten Komponente des Bremssystems. Eine andere realisierbare Bedingung ist ein Ausfallen von bestimmten Gruppen von Komponenten des Bremssystems, wie beispielsweise ein Ausfallen der Radaktoreinrichtungen der Vorderachse, der Hinterachse, einer Seite, einer Diagonale oder von drei Radaktoreinrichtungen.

Figur 6 zeigt eine vierte Ausführungsform einer Radaktoreinrichtung. Die dargestellte Radaktoreinrichtung 150 weist im Gegensatz zu der Radaktoreinrichtung der Figur 3 keine Fehlererkennungseinheit und keine Ausgangsschaltung auf. Dafür ist der Decoder 126 dazu ausgelegt, unterschiedliche Bremsmomente 152 und 154 an eine nicht skizzierte Radbremse auszugeben.

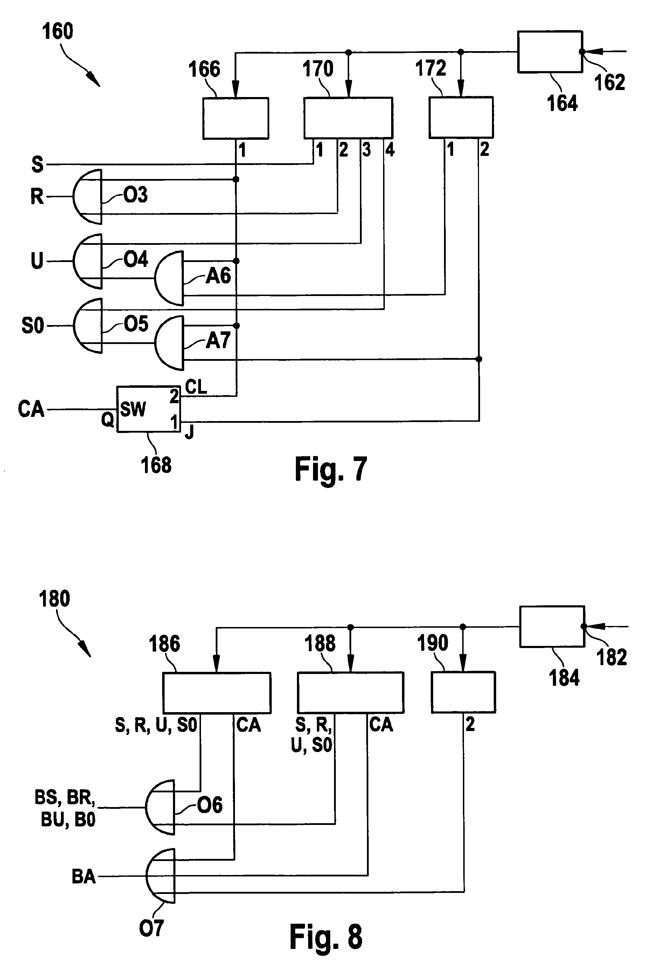

Figur 7 zeigt eine Logikschaltung 160 einer Ausführungsform einer Bremssteuereinrichtung. Die Logikschaltung 160 weist einen Eingang 162 zum Empfangen einer Ausfallmeldung von der anderen Bremsteuereinrichtung und von den Radaktoreinrichtungen des Bremssystems auf. Eine Eingangsschaltung 164 ermittelt dann anhand der empfangenen Ausfallmeldung, ob die andere Brenissteuereinirichtung, eine Radaktoreinrichtung des eigenen Bremskreises oder eine Radaktoreinrichtung des anderen Bremskreises ausgefallen ist.

Erkennt die Eingangsschaltung 164 ein Auffallen der anderen Bremssteuereinrichtung, so gibt sie ein Signal an den Zähler 166 aus. Der Zähler 166 stellt sofort nach dem Signalempfang ein High-Signal an seinem Ausgang bereit. Dieses High-Signal wird an ein ODER-Gatter 03, an ein UND-Gatter A6 und an ein UND-Gatter A7 weitergeleitet. Zusätzlich wird das High-Signal auch an ein Steuerwerk 168 bereitgestellt.

Ermittelt die Eingangsschaltung 164, dass eine Radaktoreinrichtung in den inaktiven Zustand geschaltet ist, so gibt sie ein Signal an einen Zähler 170 aus. Der Zähler 170 ermittelt die Anzahl der ausgefallenen Radaktoreinrichtungen. Der Zählerstand des Zählers erreicht dabei maximal den Wert 4, wenn alle Radaktoreinrichtungen ausgefallen sind. Ist nur eine Radaktoreinrichtung ausgefallen, so gibt der Zähler 170 ein High-Signal an den Ausgang S aus. Sind zwei Radaktoreinrichtungen inaktiv geschaltet, so wird ein High-Signal an das ODER-Gatter 03 bereitgestellt. Nach einem Ausfallen von drei Radaktoreinrichtungen erhält ein ODER-Gatter 04 ein High-Signal von dem Zähler 170. Sind alle vier Radaktoreinrichtungen inaktiv geschaltet, so gibt der Zähler 170 ein High-Signal an ein weiteres ODER-Gatter 05 aus.

Erkennt die Eingangsschaltung 164, dass eine Radaktoreinrichtung des eigenen Bremskreises inaktiv ist, so wird ein entsprechendes Signal an einen Zähler 172 ausgegeben. Der Zähler 172 für die Anzahl der ausgefallenen Radaktoreinrichtungen im eigenen Bremskreis erreicht einen maximalen Zählerstand von 2. Dieser tritt auf, wenn beide Radaktoreinrichtungen des eigenen Bremskreises ausgefallen sind. Liegt nur eine Radaktoreinrichtung des eigenen Bremskreises im inaktiven Zustand vor, so gibt der Zähler 172 ein High-Signal an das UND-Gatter A6 aus. Sind hingegen beide Radaktoreinrichtungen des eigenen Bremskreises inaktiv geschaltet, so wird ein High-Signal an das UND-Gatter A7 und an das Steuerwerk 168 ausgegeben.

Das UND-Gatter A6 erkennt eine Situation, in welcher die andere Bremssteuereinrichtung und eine Radaktoreinrichtung des eigenen Bremskreises inaktiv vorliegen. Das UND-Gatter A6 gibt dann ein High-Signal an das ODER-Gatter 04 aus.

Das UND-Gatter A7 dient zur Ermittlung einer Situation, in welcher die andere Bremssteuereinrichtung und beide Radaktoreinrichtungen des eigenen Bremskreises inaktiviert sind. Liegt diese Situation vor, so gibt das UND-Gatter A7 ein High-Signal an das ODER-Gatter 05 aus.

Das ODER-Gatter 03 stellt ein High-Signal an einen Ausgang R bereit, wenn die andere Bremssteuereinrichtung oder zwei Steuereinrichtungen ausgefallen sind. Das ODER-Gatter 04 ist dem Ausgang U zugeordnet. Ein High-Signal wird am Ausgang U bereitgestellt, wenn drei Radaktoreinrichtungen inaktiviert sind oder wenn die andere Bremssteuereinrichtung und eine Radaktoreinrichtung des eigenen Bremskreises ausgefallen sind.

Das ODER-Gatter 05 dient zur Ansteuerung des Ausgangs S0. Der Ausgang S0 empfängt ein High-Signal, wenn alle vier Radaktoreinrichtungen inaktiviert sind oder wenn die andere Bremssteuereinrichtung und zwei Radaktoreinrichtungen des eigenen Bremssystems ausgefallen sind.

Das Steuerwerk 168 kann beispielsweise durch einen JK-Flip-Flop realisiert werden, an dessen Setzeingang J das Signal des Zählers 172 und an dessen Clock-Eingang CL das Signal des Zählers 166 angelegt wird. Das Steuerwerk ist an den Ausgang CA gekoppelt.

Die Ausgänge S, R, U, S0 und CA entsprechen Meldungen, welche bei Anliegen eines High-Signals an ein externes System ausgegeben werden. Der S-Ausgang entspricht der Meldung, dass lediglich eine Radaktoreinrichtung ausgefallen ist. Bei einem High-Signal am Ausgang R wird eine Meldung ausgegeben, dass das andere Bremssteuereinrichtung oder zwei Radaktoreinrichtungen ausgefallen sind, was jedoch noch nicht ein automatisches Abbremsen des Fahrzeugs erfordert. Liegt am Ausgang U ein High-Signal an, so sind entweder drei Radaktoreinrichtungen oder die andere Bremssteuereinrichtung und eine Radaktoreinrichtungen oder die andere Bremssteuereinrichtung und eine Radaktoreinrichtung des eigenen Bremskreises ausgefallen. Eine derartige Situation erfordert noch nicht ein automatisches Abbremsen des Fahrzeugs.

Am Ausgang S0 liegt immer dann ein High-Signal an, wenn entweder alle vier Radaktoreinrichtungen oder die andere Bremssteuereinrichtung und zwei Radaktoreinrichtungen des eigenen Bremskreises ausgefallen sind. In einer derartigen Situation wird eine entsprechende Fehlermeldung ausgegeben.

Mit Hilfe des Ausgangs CA wird eine entsprechende Meldung immer dann ausgegeben, wenn zuerst die beiden Radaktoreinrichtungen des eigenen Bremskreises und dann das andere Bremssteuereinrichtung ausfallen.

Figur 8 zeigt eine Logikschaltung 180 für eine Ausführungsform eines externen Systems. Das externe System wandelt mit Hilfe der Logikschaltung 180 die von den beiden Bremssteuereinrichtungen empfangenen Nachrichten S, R, U, S0 oder CA in eine Ausgangsnachricht um, welche dem Fahrer über eine fahrzeugeigene Anzeigeeinrichtung angezeigt wird.

Die Logikschaltung 180 weist einen Eingang 182 auf, welchem eine Eingangsschaltung 184 zugeordnet ist. Abhängig davon, ob die Nachricht von der Bremssteuereinrichtung des ersten Bremskreises oder der Bremssteuereinrichtung des zweiten Bremskreises empfangen wird, gibt die Eingangsschaltung 184 die Nachricht an einen Zähler 186 oder 188 weiter. Zusätzlich benachrichtigt die Eingangsschaltung 184 nach jedem Empfang einer Nachricht von einer Bremssteuereinrichtung einen Zähler 190.

Jeder der beiden Zähler 186 und 188 ist dazu ausgelegt, zwischen den Nachrichten S, R, U und S0 oder der Nachricht CA zu unterscheiden. Wird eine Nachricht S, R, U oder S0 empfangen, so wird durch jeden der beiden Zähler 186 und 188 ein High-Signal an ein ODER-Gatter 06 ausgegeben, welches an die Ausgange BS, BR, B0 und BU gekoppelt ist.

Empfängt einer der beiden Zähler 186 oder 188 die Nachricht CA, so stellt er ein High-Signal an ein ODER-Gatter 07 bereit. Auch der Zähler 270 gibt bei seinem Zählerstand 2 ein High-Signal an das ODER-Gatter 07 aus. Das ODER-Gatter 07 ist an den Ausgang BA gekoppelt.

Bei einem High-Signal am Ausgang BS wird dem Fahrer beispielsweise vorgeschlagen, eine Servicestation aufzusuchen. Liegt das High-Signal an dem Ausgang BR an, so wird ihm dringend geraten, dies zu tun. Bei einem High-Signal am Ausgang BU wird dem Fahrer noch eine zusätzliche Dringlichkeitswarnung gegeben. Dies geschieht auch bei einem High-Signal am Ausgang B0. Liegt das High-Signal hingegen am Ausgang BA an, so wird der Fahrer darüber informiert, dass nun aufgrund des Zustands seines Bremssystems ein automatisches Abbremsen seines Fahrzeugs erfolgt.

## Patentansprüche

1. Bremssystem (10) für ein Fahrzeug mit
- einer ersten und einer zweiten Bremssteuereinrichtung (30a,30b), wobei jede der beiden Bremssteuereinrichtungen (30a,30b) im aktiven Zustand dazu ausgelegt ist, eine Eingabe eines Fahrers des Fahrzeugs zum Reduzieren der aktuellen Geschwindigkeit des Fahrzeugs zu erfassen und bei Erfassen der Eingabe ein entsprechendes Steuersignal auszugeben;
- vier Radaktoreinrichtungen (34a,34b,36a,36b), welche jeweils einem Rad des Fahrzeugs zugeordnet sind und im aktiven Zustand dazu ausgelegt sind, nach einem Empfang des Steuersignals ein Bremsmoment (52) auf das zugeordnete Rad auszuüben; und
- einer ersten und einer zweiten Signalleitung (32a,32b) zum Weiterleiten des Steuersignals, wobei die erste Signalleitung (32a,32b) die erste Bremssteuereinrichtung (30a,30b) mit zwei von den vier Radaktoreinrichtungen (34a,34b,36a,36b) verbindet und die zweite Signalleitung (32a,32b) die zweite Bremssteuereinrichtung (30a,30b) mit den zwei anderen Radaktoreinrichtungen (34a,34b,36a,36b) verbindet, wobei jede der vier Radaktoreinrichtungen (34a,34b,36a,36b) im aktiven Zustand zusätzlich dazu ausgelegt ist, zu erkennen, ob sich eine vorgegebene Anzahl von Bremssteuereinrichtungen (30a,30b) und/oder Radaktoreinrichtungen (34a,34b,36a,36b) im inaktiven Zustand befinden, und bei einem Erkennen, dass die vorgegebene Anzahl von Bremssteuereinrichtungen (30a,30b) und/oder Radaktoreinrichtungen (34a,34b,36a,36b) sich im inaktiven Zustand befinden, das der Bremssteuereinrichtung (30a,30b) zugeordnete Rad des Fahrzeugs automatisch abgebremst wird, wobei die Radaktoreinrichtungen (34a,34b,36a,36b) nach einem sequenziellen Auftreten von Funktionsstörungen an anderen Radaktoreinrichtungen (34a, 34b, 36a, 36b) und/oder an den beiden Bremssteuereinrichtungen (30a 30b) eine vorgegebene, auf die auftretende Situation abgestimmte Bremsstrategie ausführen.

2. Bremssystem (10) nach Anspruch 1, wobei jede der zwei Bremssteuereinrichtungen (30a,30b) dazu ausgelegt ist, ihre Funktionsfähigkeit selbst zu überprüfen und sich bei Erkennen einer Beeinträchtigung ihrer Funktionsfähigkeit in den inaktiven Zustand zu schalten und/oder ein Warnsignal an die andere Bremssteuereinrichtung (30a,30b) und/oder mindestens eine der Radaktoreinrichtungen (34a,34b,36a,36b) auszugeben.

3. Bremssystem (10) nach Anspruch 1 oder 2, wobei jede der vier Radaktoreinrichtungen (34a,34b,36a,36b) dazu ausgelegt ist, ihre Funktionsfähigkeit selbst zu überprüfen und sich bei Erkennen einer Beeinträchtigung ihrer Funktionsfähigkeit in den inaktiven Zustand zu schalten und/oder ein Warnsignal an mindestens eine der Bremssteuereinrichtungen (30a,30b) und/oder mindestens eine der anderen Radaktoreinrichtungen (34a,34b,36a,36b) auszugeben.

4. Bremssystem (10) nach Anspruch 3, wobei jede der vier Radaktoreinrichtungen (34a,34b,36a,36b) dazu ausgelegt ist, anhand des empfangenen Warnsignals zu erkennen, dass sich mindestens eine der Bremssteuereinrichtungen (30a,30b) und/oder Radaktoreinrichtungen (34a,34b,36a,36b) im inaktiven Zustand befindet.

5. Bremssystem (10) nach einem der vorhergehenden Ansprüche, wobei jede der vier Radaktoreinrichtungen (34a,34b,36a,36b) dazu ausgelegt ist, zu erkennen, ob von einer der Bremssteuereinrichtungen (30a,30b) und/oder Radaktoreinrichtungen (34a,34b,36a,36b) innerhalb einer vorgegebenen Zeitdauer ein Signal empfangen wird, und, sofern dies nicht der Fall ist, zu erkennen, dass sich die jeweilige Bremssteuereinrichtung (30a,30b) und/oder Radaktoreinrichtung (34a,34b,36a,36b) im inaktiven Zustand befindet.

6. Bremssystem (10) nach einem der vorhergehenden Ansprüche, wobei jede der mit der ersten Signalleitung (32a,32b) verbundenen Radaktoreinrichtungen (34a,34b,36a,36b) dazu ausgelegt ist, bei einem Erkennen, dass sich zuerst die zweite Bremssteuereinrichtung (30a,30b) und dann die erste Bremssteuereinrichtung (30a,30b) in dem inaktiven Zustand befindet, automatisch ein vorgegebenes Bremsmoment (52) auf das zugeordnete Rad des Fahrzeugs auszuüben.

7. Bremssystem (10) nach einem der vorhergehenden Ansprüche, wobei jede der mit der ersten Signalleitung (32a,32b) verbundenen Radaktoreinrichtungen (34a,34b,36a,36b) dazu ausgelegt ist, bei einem Erkennen, dass die mit der zweiten Signalleitung (32a,32b) verbundenen Radaktoreinrichtungen (34a,34b,36a,36b) und die erste Bremssteuereinrichtung (30a,30b) im inaktiven Zustand vorliegen, automatisch das vorgegebene Bremsmoment (52) auf das zugeordnete Rad des Fahrzeugs auszuüben.

8. Bremssystem (10) nach einem der vorhergehenden Ansprüche, wobei die erste und die zweite Bremssteuereinrichtung (30a,30b) über eine dritte Signalleitung (38) miteinander verbunden sind.

9. Bremssystem (10) nach Anspruch 8, wobei die erste und die zweite Bremssteuereinrichtung (30a,30b) über eine vierte Signalleitung (40) miteinander, mit einem fahrzeugeigenen Anzeigegerät (42) und mit externen Systemen (42) bis (46) verbunden sind.

10. Verfahren zum Betreiben eines Bremssystems (10) für ein Fahrzeug mit einer ersten und einer zweiten Bremssteuereinrichtung (30a,30b), wobei jede der beiden Bremssteuereinrichtungen (30a,30b) im aktiven Zustand dazu ausgelegt ist, eine Eingabe eines Fahrers des Fahrzeugs zum Reduzieren der aktuellen Geschwindigkeit des Fahrzeugs zu erfassen und bei Erfassen der Eingabe ein entsprechendes Steuersignal auszugeben, mit vier Radaktoreinrichtungen (34a,34b,36a,36b), welche jeweils einem Rad des Fahrzeugs zugeordnet sind und im aktiven Zustand dazu ausgelegt sind, nach einem Empfang des Steuersignals ein Bremsmoment (52) auf das zugeordnete Rad auszuüben, und mit einer ersten und einer zweiten Signalleitung (32a,32b) zum Weiterleiten des Steuersignals, wobei die erste Signalleitung (32a,32b) die erste Bremssteuereinrichtung (30a,30b) mit zwei von den vier Radaktoreinrichtungen (34a,34b,36a,36b) verbindet und die zweite Signalleitung (32a,32b) die zweite Bremssteuereinrichtung (30a,30b) mit den zwei anderen Radaktoreinrichtungen (34a,34b,36a,36b) verbindet, mit den Schritten:
- Ermitteln eines Zustands der zwei Bremssteuereinrichtungen (30a,30b) und der vier Radaktoreinrichtungen (34a,34b,36a,36b); und
- sofern erkannt wird, dass eine vorgegebene Anzahl von Bremssteuereinrichtungen (30a,30b) und/oder Radaktoreinrichtungen (34a,34b,36a,36b) sich im inaktiven Zustand befinden, automatisch mindestens eines der Räder des Fahrzeugs durch die zugeordnete Radaktoreinrichtung (34a,34b,36a,36b) abgebremst wird, wobei die Radaktoreinrichtungen (34a,34b,36a,36b) nach einem sequenziellen Auftreten von Funktionsstörungen an anderen Radaktoreinrichtungen (34a, 39b, 36a, 36b) und/oder an den beiden Bremssteuereinrichtungen (30a, 30b) eine vorgegebene, auf die auftretende Situation abgestimmte Bremsstrategie ausführen.

11. Verfahren nach Anspruch 10, wobei eine dem ermittelten Zustand entsprechende Nachricht an ein externes Anzeigegerät (41), an ein externes Tonausgabegerät und/oder an ein externes Steuergerät (44,46) durch zumindest eine der Bremssteuereinrichtungen (30a,30b) ausgegeben wird.

## Claims

1. Brake system (10) for a vehicle, having
- a first and a second brake control device (30a, 30b), wherein each of the two brake control devices (30a, 30b) is configured in the active state to sense an input by a driver of the vehicle for reducing the current speed of the vehicle and, on sensing the input, to output a corresponding control signal;
- four wheel actuator devices (34a, 34b, 36a, 36b), which are each assigned to a wheel of the vehicle and are configured in the active state to apply, after reception of the control signal, a braking torque (52) to the assigned wheel; and
- a first and a second signal line (32a, 32b) for passing on the control signal, wherein the first signal line (32a, 32b) connects the first brake control device (30a, 30b) to two of the four wheel actuator devices (34a, 34b, 36a, 36b), and the second signal line (32a, 32b) connects the second brake control device (30a, 30b) to the two other wheel actuator devices (34a, 34b, 36a, 36b), wherein
each of the four wheel actuator devices (34a, 34b, 36a, 36b) is additionally configured in the active state to detect whether a predefined number of brake control devices (30a, 30b) and/or of wheel actuator devices (34a, 34b, 36a, 36b) are in the inactive state, and, when it is detected that the predefined number of brake control devices (30a, 30b) and/or of wheel actuator devices (34a, 34b, 36a, 36b) are in the inactive state, the wheel of the vehicle which is assigned to the brake control device (30a, 30b) is automatically braked, wherein, after sequential occurrence of functional faults at other wheel actuator devices (34a, 34b, 36a, 36b) and/or at the two brake control devices (30a, 30b), the wheel actuator devices (34a, 34b, 36a, 36b) carry out a predefined braking strategy which is matched to the situation which is occurring.

2. Brake system (10) according to Claim 1, wherein each of the two brake control devices (30a, 30b) is configured to check its functional capability itself and, when an adverse effect on its functional capability is detected, to switch into the inactive state and/or to output a warning signal to the other brake control device (30a, 30b) and/or at least one of the wheel actuator devices (34a, 34b, 36a, 36b).

3. Brake system (10) according to Claim 1 or 2, wherein each of the four wheel actuator devices (34a, 34b, 36a, 36b) is configured to check its functional capability itself and, when an adverse effect on its functional capability is detected, to switch into the inactive state and/or to output a warning signal to at least one of the brake control devices (30a, 30b) and/or at least one of the other wheel actuator devices (34a, 34b, 36a, 36b).

4. Brake system (10) according to Claim 3, wherein each of the four wheel actuator devices (34a, 34b, 36a, 36b) is configured to detect, on the basis of the received warning signal, that at least one of the brake control devices (30a, 30b) and/or wheel actuator devices (34a, 34b, 36a, 36b) is in the inactive state.

5. Brake system (10) according to one of the preceding claims, wherein each of the four wheel actuator devices (34a, 34b, 36a, 36b) is configured to detect whether a signal is received by one of the brake control devices (30a, 30b) and/or wheel actuator devices (34a, 34b, 36a, 36b) within a predefined time period, and, if this is not the case, to detect that the respective brake control device (30a, 30b) and/or wheel actuator device (34a, 34b, 36a, 36b) is in the inactive state.

6. Brake system (10) according to one of the preceding claims, wherein each of the wheel actuator devices (34a, 34b, 36a, 36b) which is connected to the first signal line (32a, 32b) is configured, in the event of it being detected that the second brake control device (30a, 30b) is in the inactive state first and then the first brake control device (30a, 30b) is in the inactive state, to automatically apply a predefined braking torque (52) to the assigned wheel of the vehicle.

7. Brake system (10) according to one of the preceding claims, wherein each of the wheel actuator devices (34a, 34b, 36a, 36b) which is connected to the first signal line (32a, 32b) is configured, in the event of it being detected that the wheel actuator devices (34a, 34b, 36a, 36b) which are connected to the second signal line (32a, 32b) and the first brake control device (30a, 30b) are in the inactive state, to automatically apply the predefined braking torque (52) to the assigned wheel of the vehicle.

8. Brake system (10) according to one of the preceding claims, wherein the first and second brake control devices (30a, 30b) are connected to one another via a third signal line (38).

9. Brake system (10) according to Claim 8, wherein the first and the second brake control device (30a, 30b) are connected via a fourth signal line (40) to one another, to a display device (42) in the actual vehicle and to external systems (42) to (46).

10. Method for operating a brake system (10) for a vehicle having a first and a second brake control device (30a, 30b), wherein each of the two brake control devices (30a, 30b) is configured in the active state to sense an input by a driver of the vehicle for reducing the current speed of the vehicle, and, on sensing the input, to output a corresponding control signal, having four wheel actuator devices (34a, 34b, 36a, 36b), which are each assigned to a wheel of the vehicle and are configured in the active state to apply, after reception of the control signal, a braking torque (52) to the assigned wheel, and having a first and a second signal line (32a, 32b) for passing on the control signal, wherein the first signal line (32a, 32b) connects the first brake control device (30a, 30b) to two of the four wheel actuator devices (34a, 34b, 36a, 36b), and the second signal line (32a, 32b) connects the second brake control device (30a, 30b) to the two other wheel actuator devices (34a, 34b, 36a, 36b), having the steps:
- determination of a state of the two brake control devices (30a, 30b) and of the four wheel actuator devices (34a, 34b, 36a, 36b); and,
- if it is detected that a predefined number of brake control devices (30a, 30b) and/or of wheel actuator devices (34a, 34b, 36a, 36b) are in the inactive state, at least one of the wheels of the vehicle is automatically braked by the assigned wheel actuator device (34a, 34b, 36a, 36b), wherein, after functional faults have occurred sequentially at other wheel actuator devices (34a, 34b, 36a, 36b) and/or at the two brake control devices (30a, 30b), the wheel actuator devices (34a, 34b, 36a, 36b) apply a predefined braking strategy which is matched to the situation which is occurring.

11. Method according to Claim 10, wherein a message which corresponds to the state which is determined is output to an external display device (41), to an external sound output device and/or to an external control device (44, 46) by at least one of the brake control devices (30a, 30b).

## Revendications

1. Système de freinage (10) pour un véhicule comprenant :
- un premier et un deuxième dispositif de commande de freinage (30a, 30b), chacun des deux dispositifs de commande de freinage (30a, 30b), dans l'état actif, étant conçu pour détecter une entrée d'un conducteur du véhicule pour réduire la vitesse actuelle du véhicule, et à la détection de l'entrée, pour émettre un signal de commande correspondant ;
- quatre dispositifs d'actionneurs de roue (34a, 34b, 36a, 36b) qui sont associés à chaque fois à une roue du véhicule, et qui dans l'état actif, sont conçus, à la réception du signal de commande, pour exercer un couple de freinage (52) sur la roue associée ; et
- une première et une deuxième conduite de signal (32a, 32b) pour transmettre le signal de commande, la première conduite de signal (32a, 32b) reliant le premier dispositif de commande de freinage (30a, 30b) à deux des quatre dispositifs d'actionneurs de roue (34a, 34b, 36a, 36b) et la deuxième conduite de signal (32a, 32b) reliant le deuxième dispositif de commande de freinage (30a, 30b) aux deux autres dispositifs d'actionneurs de roue (34a, 34b, 36a, 36b),
chacun des quatre dispositifs d'actionneurs de roue (34a, 34b, 36a, 36b), dans l'état actif, étant en outre conçu pour reconnaître si un nombre prédéfini de dispositifs de commande de freinage (30a, 30b) et/ou de dispositifs d'actionneurs de roue (34a, 34b, 36a, 36b) se trouve dans l'état inactif, et en cas de reconnaissance que le nombre prédéfini de dispositifs de commande de freinage (30a, 30b) et/ou de dispositifs d'actionneurs de roue (34a, 34b, 36a, 36b) se trouve dans l'état inactif, la roue du véhicule associée au dispositif de commande de freinage (30a, 30b) étant freinée automatiquement, les dispositifs d'actionneurs de roue (34a, 34b, 36a, 36b), après l'apparition séquentielle de perturbations de fonctionnement au niveau d'autres dispositifs d'actionneurs de roue (34a, 34b, 36a, 36b) et/ou au niveau des deux dispositifs de commande de freinage (30a, 30b) effectuant une stratégie de freinage prédéfinie, adaptée à la situation présente.

2. Système de freinage (10) selon la revendication 1, dans lequel chacun des deux dispositifs de commande de freinage (30a, 30b) est conçu de manière à contrôler lui-même sa fonctionnalité et en cas de reconnaissance d'une dégradation de sa fonctionnalité, de manière à passer dans l'état inactif et/ou de manière à émettre un signal d'avertissement à l'autre dispositif de commande de freinage (30a, 30b) et/ou à au moins l'un des dispositifs d'actionneurs de roue (34a, 34b, 36a, 36b).

3. Système de freinage (10) selon la revendication 1 ou 2, dans lequel chacun des quatre dispositifs d'actionneurs de roue (34a, 34b, 36a, 36b) est conçu de manière à contrôler lui-même sa fonctionnalité et en cas de reconnaissance d'une dégradation de sa fonctionnalité, de manière à passer dans l'état inactif et/ou de manière à émettre un signal d'avertissement à au moins l'un des dispositifs de commande de freinage (30a, 30b) et/ou à au moins l'un des autres dispositifs d'actionneurs de roue (34a, 34b, 36a, 36b).

4. Système de freinage (10) selon la revendication 3, dans lequel chacun des quatre dispositifs d'actionneurs de roue (34a, 34b, 36a, 36b) est conçu de manière à reconnaitre, à l'aide du signal d'avertissement reçu, qu'au moins l'un des dispositifs de commande de freinage (30a, 40b) et/ou des dispositifs d'actionneurs de roue (34a, 34b, 36a, 36b) se trouve dans l'état inactif.

5. Système de freinage (10) selon l'une quelconque des revendications précédentes, dans lequel chacun des quatre dispositifs d'actionneurs de roue (34a, 34b, 36a, 36b) est conçu de manière à reconnaitre si un signal est reçu dans une période de temps prédéterminée par l'un des dispositifs de commande de freinage (30a, 30b) et/ou des dispositifs d'actionneurs de roue (34a, 34b, 36a, 36b), et si ce n'est pas le cas, de manière à reconnaitre que le dispositif de commande de freinage respectif (30a, 30b) et/ou le dispositif d'actionneur de roue (34a, 34b, 36a, 36b) se trouve dans l'état inactif.

6. Système de freinage (10) selon l'une quelconque des revendications précédentes, dans lequel chacun des dispositifs d'actionneurs de roue (34a, 34b, 36a, 36b) associé à la première conduite de signal (32a, 32b) est conçu de manière à exercer automatiquement un couple de freinage prédéfini (52) sur la roue associée du véhicule dans le cas d'une reconnaissance que d'abord le deuxième dispositif de commande de freinage (30a, 30b), puis le premier dispositif de commande de freinage (30a, 30b), se trouve dans l'état inactif.

7. Système de freinage (10) selon l'une quelconque des revendications précédentes, dans lequel chacun des dispositifs d'actionneurs de roue (34a, 34b, 36a, 36b) associé à la première conduite de signal (32a, 32b) est conçu de manière à exercer automatiquement le couple de freinage prédéfini (52) sur la roue associée du véhicule dans le cas d'une reconnaissance que les dispositifs d'actionneurs de roue (34a, 34b, 36a, 36b) associés à la deuxième conduite de signal (32a, 32b) et le premier dispositif de commande de freinage (30a, 30b) sont dans l'état inactif.

8. Système de freinage (10) selon l'une quelconque des revendications précédentes, dans lequel le premier et le deuxième dispositif de commande de freinage (30a, 30b) sont connectés l'un à l'autre par le biais d'une troisième conduite de signal (38).

9. Système de freinage (10) selon la revendication 8, dans lequel le premier et le deuxième dispositif de commande de freinage (30a, 30b) sont connectés par le biais d'une quatrième conduite de signal (40), l'un à l'autre, à un appareil d'affichage propre au véhicule (42) et à des systèmes externes (42 à (46).

10. Procédé pour le fonctionnement d'un système de freinage (10) pour un véhicule comprenant un premier et un deuxième dispositif de commande de freinage (30a, 30b), chacun des deux dispositifs de commande de freinage (30a, 30b), dans l'état actif, étant conçu pour détecter une entrée d'un conducteur du véhicule pour réduire la vitesse actuelle du véhicule, et à la détection de l'entrée, pour émettre un signal de commande correspondant, quatre dispositifs d'actionneurs de roue (34a, 34b, 36a, 36b) qui sont associés à chaque fois à une roue du véhicule, et qui dans l'état actif, sont conçus, à la réception du signal de commande, pour exercer un couple de freinage (52) sur la roue associée, et une première et une deuxième conduite de signal (32a, 32b) pour transmettre le signal de commande, la première conduite de signal (32a, 32b) reliant le premier dispositif de commande de freinage (30a, 30b) à deux des quatre dispositifs d'actionneurs de roue (34a, 34b, 36a, 36b) et la deuxième conduite de signal (32a, 32b) reliant le deuxième dispositif de commande de freinage (30a, 30b) aux deux autres dispositifs d'actionneurs de roue (34a, 34b, 36a, 36b), comprenant les étapes consistant à :
- déterminer un état des deux dispositifs de commande de freinage (30a, 30b) et des quatre dispositifs d'actionneurs de roue (34a, 34b, 36a, 36b) ; et
- s'il est détecté qu'un nombre prédéfini de dispositifs de commande de freinage (30a, 30b) et/ou de dispositifs d'actionneurs de roue (34a, 34b, 36a, 36b) se trouve dans l'état inactif, au moins l'une des roues du véhicule est automatiquement freinée par le dispositif d'actionneur de roue (34a, 34b, 36a, 36b) associé, les dispositifs d'actionneurs de roue (34a, 34b, 36a, 36b), après l'apparition séquentielle de perturbations de fonctionnement au niveau d'autres dispositifs d'actionneurs de roue (34a, 34b, 36a, 36b) et/ou au niveau des deux dispositifs de commande de freinage (30a, 30b) effectuant une stratégie de freinage prédéfinie, adaptée à la situation présente.

11. Procédé selon la revendication 10, dans lequel une information correspondant à l'état déterminé est envoyée à un appareil d'affichage externe (41), un appareil d'émission sonore externe et/ou un appareil de commande externe (44, 46) par au moins l'un des dispositifs de commande de freinage (30a, 30b).
